(19)

Europäisches
Patentamt

European
Patent Office

Office européen
des brevets

(11) **EP 2 634 067 B1**

(12) **EUROPEAN PATENT SPECIFICATION**

(45) Date of publication and mention
of the grant of the patent:
**09.11.2016 Bulletin 2016/45**

(51) Int Cl.:
**B62D 5/04** *(2006.01)* **B62D 6/00** *(2006.01)*

(21) Application number: **13156978.2**

(22) Date of filing: **27.02.2013**

(54) **Vehicle control system, steering simulating system, steering torque application method, program for steering torque application method, and storage medium that stores program for steering torque application method**

Fahrzeugsteuerungssystem, Lenksimulationssystem, Lenkdrehmoment-Anwendungsverfahren, Programm für Lenkdrehmoment-Anwendungsverfahren und Speichermedium, das ein Programm zum Lenken des Drehmomentanwendungsverfahren speichert

Système de commande de véhicule, système de simulation de direction, procédé d'application de couple de direction, programme pour un procédé d'application de couple de direction et support de stockage pour un tel programme

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2012 JP 2012041981**

(43) Date of publication of application:
**04.09.2013 Bulletin 2013/36**

(73) Proprietor: **JTEKT Corporation**
**Osaka-shi**
**Osaka 542-8502 (JP)**

(72) Inventors:
• **Hirano, Maiko**
**Nagakute-shi, Aichi 480-1192 (JP)**
• **Yamada, Daisuke**
**Nagakute-shi, Aichi 480-1192 (JP)**

• **Muragishi, Yuji**
**Nagakute-shi, Aichi 480-1192 (JP)**
• **Tsurumi, Yasuaki**
**Nagakute-shi, Aichi 480-1192 (JP)**
• **Kushiro, Ikuo**
**Toyota-shi, Aichi 471-8571 (JP)**
• **Sawamura, Koji**
**Osaka-shi, Osaka 542-8502 (JP)**
• **Tomita, Takehito**
**Osaka-shi, Osaka 542-8502 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(56) References cited:
**EP-A2- 1 227 027    EP-A2- 1 243 496**
**JP-A- 2011 057 173**

**Description**

BACKGROUND OF THE INVENTION

1. Field of the Invention

The invention relates to a vehicle control system, a steering simulating system, a steering torque application method, a program for the steering torque application method, and a storage medium that stores the program and, more particularly, to a vehicle control system, a steering simulating system and a steering torque application method, which execute control such that a target steering torque based on driver's steering operation is achieved, a program for the steering torque application method, and a storage medium that stores the program.

2. Description of Related Art

Conventionally, the steering torque of a steering wheel is applied when the driver controls the direction of an automobile. The steering torque balances with the sum of elements, such as the restoring force of tires, the stiffness, viscosity and friction of a steering shaft and an assist torque generated by a power steering. The assist torque generated by a power steering is originally intended to reduce a burden on driver's steering operation and to improve operability in a low vehicle speed range, and is mostly applied in the same direction as the steering torque. In recent years, there has been suggested a technique for changing an assist method on the basis of a vehicle speed, that is, for applying an assist torque in a direction opposite to a steering torque in order to improve stability in a high vehicle speed range (for example, Japanese Patent Application Publication No. 2004-175163 (JP 2004-175163 A)).

A steering feel that is good for a driver is obtained when a steering angle and a steering torque vary in accordance with a certain appropriate correlation. As described above, the magnitude of steering torque is influenced by the mechanical characteristics of tires and steering shaft; however, it is known that these mechanical characteristics vary on the basis of a vehicle speed, so a change (deterioration) in steering feel with a variation in vehicle speed is perceived as a problem. In order to solve the problem, there has been suggested a technique for controlling an assist torque generated by a power steering and, as a result, constantly maintaining a set correlation between a steering angle and a steering torque not on the basis of a vehicle speed (for example, Japanese Patent Application Publication No. 2003-285753 (JP 2003-285753 A)).

The technique described in JP 2004-175163 A and the technique described in JP 2003-285753 A are techniques for generally increasing or reducing a steering torque during steering operation. However, a variation in the steering torque in the middle of steering operation tends to be experienced by a driver. Focusing on this point, in order to improve a steering feel of a driver, there has been suggested a technique for applying an appropriate steering torque based on the tactile characteristic of a driver (for example, Japanese Patent Application Publication No. 2011-57173 (JP 2011-57173 A)). This technique introduces a concept termed a driver's resistance quantity that is obtained on the basis of a sensory quantity caused by a rate of variation in steering torque and a sensory quantity caused by a steering torque, and then sets a target steering torque, based on the correlation between a steering torque and a resistance quantity.

In order to appropriately control a turn of a vehicle, the characteristic of a steering torque and a variation in steering angle (steering velocity) during a turn in a steering system are important. However, the technique described in JP 2011-57173 A expresses a variation in steering torque in the middle of steering operation as the correlation between a steering torque and a resistance quantity, based on the tactile characteristic of the driver, and sets an appropriate steering torque from the correlation, so there is a problem that a steering velocity is not taken into consideration. A vehicle control system having the features of the preamble of claim 1, a steering simulating system having the features of the preamble of claim 9, a storage medium having the features of the preamble of claim 11, and a program having the features of the preamble of claim 12, are known from EP 1 243 496 A2.

SUMMARY OF THE INVENTION

The invention provides a vehicle control system, a steering simulating system and a steering torque application method, which are able to apply an appropriate steering torque based on the sensorial characteristic of a driver on the basis of a steering velocity, a program for the steering torque application method, and a storage medium that stores the program.

A first aspect of the invention provides a vehicle control system that includes detecting means, target setting means, and control means. The detecting means detects a steering angle of a steering wheel and a steering velocity of the steering wheel through driver's steering operation. The target setting means, when the steering wheel is being steered from a neutral state of the steering wheel without changing a steering direction, sets a steering torque corresponding to the detected steering angle and the detected steering velocity as a target steering torque on the basis of a preset correlation at each steering velocity between a resistance quantity of the driver and one of the steering angle and the steering torque, the resistance quantity being obtained on the basis of a sensory quantity of a rate of a variation in the steering torque with respect to a variation in the steering angle and a sensory quantity of the steering torque. The control means executes control such that the target steering torque set by the target setting means is achieved.

According to the above first aspect, the detecting means detects the steering angle of the steering wheel and the steering velocity of the steering wheel through driver's steering operation. The target setting means, when the steering wheel is being steered from the neutral state of the steering wheel without changing the steering direction, sets a steering torque corresponding to the detected steering angle and the detected steering velocity as a target steering torque on the basis of the preset correlation at each steering velocity between a resistance quantity of the driver and one of the steering angle and the steering torque, the resistance quantity being obtained on the basis of a sensory quantity of a rate of a variation in the steering torque with respect to a variation in the steering angle and a sensory quantity of the steering torque.

The control means executes control such that the target steering torque set by the target setting means is achieved.

In this way, when the steering wheel is being steered from the neutral state without changing the steering direction, a target steering torque is set on the basis of the correlation at each steering velocity between a resistance quantity and one of a steering angle and a steering torque, and control is executed such that the target steering torque is achieved. By so doing, it is possible to apply an appropriate steering torque based on a driver's sensorial characteristic in response to any steering velocity.

In the above aspect of the invention, the preset correlation between the resistance quantity and one of the steering angle and the steering torque may be set such that the resistance quantity increases with an increase in the one of the steering angle and the steering torque.

In the above aspect of the invention, the target setting means may set the steering torque corresponding to the detected steering angle and the detected steering velocity as a target steering torque on the basis of a correspondence correlation at each steering velocity between the steering angle and the steering torque, the correspondence correlation being preset on the basis of the correlation at each steering velocity between the resistance quantity and the one of the steering angle and the steering torque.

The resistance quantity may become constant when the sensory quantity of the rate of a variation in the steering torque with respect to a variation in the steering angle acceleratingly reduces with an increase in the sensory quantity of the steering torque.

The sensory quantity of the steering torque may increase together with the steering torque, and an amount of increase in the sensory quantity of the steering torque with an increase in the steering torque may change from a gradually reducing tendency to a gradually increasing tendency.

The steering torque at the time when the amount of increase with an increase in the steering torque changes from the gradually reducing tendency to the gradually increasing tendency may range from 2 to 3 Nm.

The sensory quantity of the rate of a variation in the steering torque with respect to a variation in the steering angle may be directly proportional to the logarithm of the rate of a variation in the steering torque with respect to a variation in the steering angle.

The control means may executes control such that a torque assist amount, which corresponds to the target steering torque set by the target setting means, or the set target steering torque is. generated.

A second aspect of the invention relates to a steering simulating system. The steering simulating system includes detecting means, target setting means, and control means. The detecting means detects a steering angle of a steering wheel and a steering velocity of the steering wheel through driver's steering operation. The target setting means, when the steering wheel is being steered from a neutral state of the steering wheel without changing a steering direction, sets a steering torque corresponding to the detected steering angle and the detected steering velocity as a target steering torque on the basis of a preset correlation at each steering velocity between a resistance quantity of the driver and one of the steering angle and the steering torque, the resistance quantity being obtained on the basis of a sensory quantity of a rate of a variation in the steering torque with respect to a variation in the steering angle and a sensory quantity of the steering torque. The control means executes control such that the target steering torque set by the target setting means is achieved.

A third aspect of the invention relates to a steering torque application method. The steering torque application method includes: i) detecting a steering angle of a steering wheel and a steering velocity of the steering wheel through driver's steering operation; and ii) when the steering wheel is being steered from a neutral state of the steering wheel without changing a steering direction, setting a steering torque corresponding to the detected steering angle and the detected steering velocity as a target steering torque on the basis of a preset correlation at each steering velocity between a resistance quantity of the driver and one of the steering angle and the steering torque, the resistance quantity being obtained on the basis of a sensory quantity of a rate of a variation in the steering torque with respect to a variation in the steering angle and a sensory quantity of the steering torque; and iii) executing control such that the set target steering torque is achieved.

A fourth aspect of the invention provides a computer-readable storage medium storing a program for causing a computer to execute a steering torque application method. The program causes the computer to execute the following steps i) to iii): i) detecting a steering angle of a steering wheel and a steering velocity of the steering wheel through driver's steering operation; and, ii) when the steering wheel is being steered from a neutral state of the steering wheel without changing a steering direction, setting a steering torque corresponding to the detected steering angle and the detected steering velocity as a target steering torque on the basis of a preset correlation at each steering velocity between a resistance quantity of the driver and one of the steering angle and the steering torque, the resistance quantity being obtained on the basis of a sensory quantity of a rate of a variation in the steering torque with respect to a variation in the steering angle and a sensory quantity of the steering torque; and iii) executing control such that the set target steering torque is achieved.

A fifth aspect of the invention provides a program for causing a computer to execute a steering torque application method. The program causes the computer to execute the following steps i) to iii): i) detecting a steering angle of a steering wheel and a steering velocity of the steering wheel through driver's steering operation; and, ii) when the steering wheel is being steered from a neutral state of the steering wheel without changing a steering direction, setting a steering torque corresponding to the detected steering angle and the detected steering velocity as a target steering torque on the basis of a preset correlation at each steering velocity between a resistance quantity of the driver and one of the steering angle and the steering torque, the resistance quantity being obtained on the basis of a sensory quantity of a rate of a variation in the steering torque with respect to a variation in the steering angle and a sensory quantity of the steering torque; and iii) executing control such that the set target steering torque is achieved.

As described above, with the vehicle control system, steering simulating system, steering torque application method, a program for the steering torque application method and storage medium storing the program according to the invention, when the steering wheel is being steered from the neutral state without changing the steering direction, a target steering torque is set on the basis of the correlation at each steering velocity between a resistance quantity and one of a steering angle and a steering torque, and control is executed such that the target steering torque is achieved. By so doing, it is possible to apply an appropriate steering torque based on a driver's sensorial characteristic in response to any steering velocity.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a schematic view that shows the structure of a vehicle control system according to a first embodiment of the invention;

FIG. 2 is a block diagram that shows the configuration of a computer of the vehicle control system according to the first embodiment of the invention;

FIG. 3A is a graph that shows a general correlation between a steering angle and a steering torque;

FIG. 3B is a graph that shows a general correlation between a stiffness and a steering torque;

FIG. 4 is a graph that shows the correspondence of a physical quantity of a steering torque and a sensory quantity of the steering torque;

FIG. 5 is a conceptual view of a steering simulator;

FIG. 6A is a graph that shows the correlation between a reference quantity of a stiffness and a threshold;

FIG. 6B is a graph that shows the correlation between a physical quantity of a stiffness and a sensory quantity of the stiffness;

FIG. 7 is a graph that shows the correlation between a sensory quantity of a steering torque and a sensory quantity of a stiffness at the time when a resistance quantity is constant;

FIG. 8 is a view that shows a resistance quantity at the time when a steering velocity is high;

FIG. 9A is a graph that shows resistance contour lines at a steering velocity x;

FIG. 9B is a graph that shows resistance contour lines at a steering velocity y;

FIG. 9C is a graph that shows resistance contour lines at a steering velocity z;

FIG. 10 is a graph that shows the correlation between a resistance quantity and a steering torque;

FIG. 11 is a graph that shows the correlation between a sensory quantity of a steering torque and a sensory quantity of a stiffness at the time when a resistance quantity gradually increases;

FIG. 12 is a flowchart that shows the details of a characteristic calculation process routine that is executed in the vehicle control system according to the first embodiment of the invention;

FIG. 13 is a map that shows contour lines, each of which indicates the correlation between a sensory quantity of a steering torque and a sensory quantity of a stiffness at the time when a resistance quantity is constant;

FIG. 14 is a graph that shows the correspondence correlation between a steering torque and a steering angle;

FIG. 15 is a flowchart that shows the details of a torque control process routine that is executed in the vehicle control system according to the first embodiment of the invention;

FIG. 16 is a graph that shows the correlation between a resistance quantity and a steering angle;

FIG. 17 is a flowchart that shows the details of a characteristic calculation process routine that is executed in a vehicle control system according to a second embodiment of the invention;

FIG. 18 is a map that shows contour lines, each of which indicates the correlation between a sensory quantity of a steering torque and a sensory quantity of a stiffness at the time when a resistance quantity is constant;

FIG. 19 is a schematic view that shows the configuration of a vehicle control system according to a third embodiment of the invention; and

FIG. 20 is a view for illustrating a method of obtaining a target steering torque on-line.

DETAILED DESCRIPTION OF EMBODIMENTS

Hereinafter, embodiments of the invention will be described in detail with reference to the accompanying drawings.

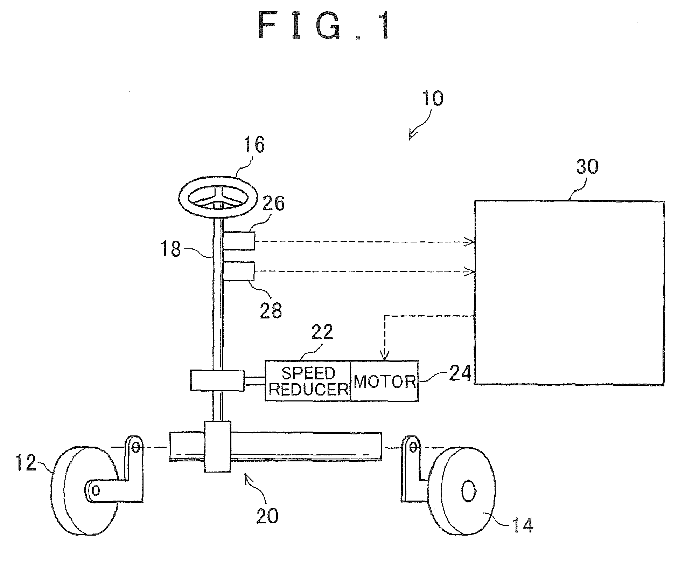

As shown in FIG. 1, a vehicle control system 10 according to a first embodiment of the invention includes a steering wheel 16, a steering shaft 18, a rack-and-pinion mechanism 20, an electric power steering motor 24 (steering actuator), a steering angle sensor 26, a steering torque sensor 28 and a computer 30 that comprehensively controls the system. The steering wheel 16 is steered by a driver in order to steer steered wheels 12 and 14 of a vehicle. The steering shaft 18 is driven for rotation through driver's steering operation. The rack-and-pinion mechanism 20 converts the rotational motion of the steering shaft 18 to the linear motion and then transmits the linear motion to the steered wheels 12 and 14. The electric power steering motor 24 transmits steering assist torque for changing the steered angle of the steered wheels 12 and 14 to the steering shaft 18 via a speed reducer 22 and then outputs the steering assist torque to the steered wheels 12 and 14. The steering angle sensor 26 detects the angle (steering angle) of the steering wheel 16. The steering torque sensor 28 detects the torque (steering torque) of the steering wheel 16.

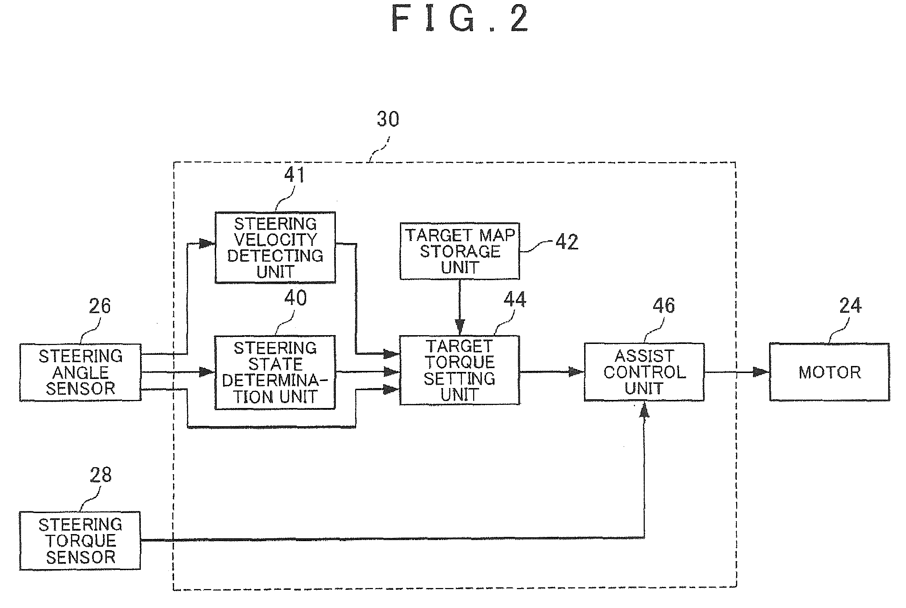

The computer 30 includes a CPU, a RAM and a ROM. The ROM stores programs for executing a characteristic calculation process routine (described later) and a torque control process routine (described later). The computer 30 is functionally configured as follows. As shown in FIG. 2, the computer 30 includes a steering state determination unit 40, a steering velocity detection unit 41, a target map storage unit 42, a target torque setting unit 44 and an assist control unit 46. The steering state determination unit 40 determines whether the steering wheel 16 is in a neutral state (straight ahead state) and in which steering direction the steering wheel 16 is steered on the basis of a steering angle signal input from the steering angle sensor 26. The steering velocity detection unit 41 detects a temporal variation in steering angle (steering velocity) on the basis of the steering angle signal input from the steering angle sensor 26. The target map storage unit 42 stores a first map and a second map. The first map shows the correspondence correlation at each steering velocity between a steering angle and a steering torque at the time when the steering wheel 16 is being steered from the neutral state without changing the steering direction. The second map shows the correspondence correlation between a steering angle and a steering torque at the time of normal steering operation. The target torque setting unit 44 sets a target steering torque using the first map or the second map on the basis of the result determined in the steering state determination unit 40. The assist control unit 46 controls the operation of the electric power steering motor 24 on the basis of the set target steering torque and the detected steering torque.

Here, the principle of the present embodiment will be described.

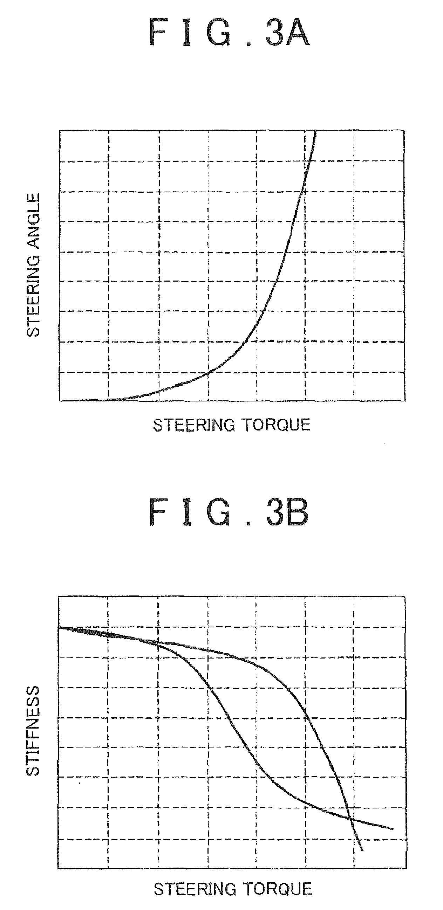

First, the characteristic of a general vehicle will be described. It is known that, as shown in FIG. 3A, the steering reaction force characteristic (the correlation between a steering torque and a steering angle) at the time of turning the steering wheel generally has a convex downward variation. This indicates that, with an increase in steering torque, the ratio of a variation in steering torque to a variation in steering angle (hereinafter, also referred to as stiffness) monotonously decreases; however, the degree of the decrease is various depending on a vehicle type and a travel condition. As shown in FIG. 3B, the stiffness monotonously decreases with an increase in steering torque; however, a rate of decrease (the gradient of the curve shown in FIG. 3B) generally fluctuates.

When the degree of decrease in stiffness has a set feature, a driver experiences a good steering feel. This is because a resistance (a sense that a resistance is applied due to the restoring force of the steering wheel toward an original position) as a result of steering operation does not unnaturally fluctuate.

The above-described characteristic that the driver experiences a good steering feel is easily understandable when taking the nonlinearity of a sense of a human into consideration. Here, sensorial characteristics against two physical quantities, that is, a steering torque and a stiffness, are key factors.

First, the correlation between a physical quantity and a sensory quantity will be described. Here, the correlation between a physical quantity and a sensory quantity for a steering torque and a stiffness will be described.

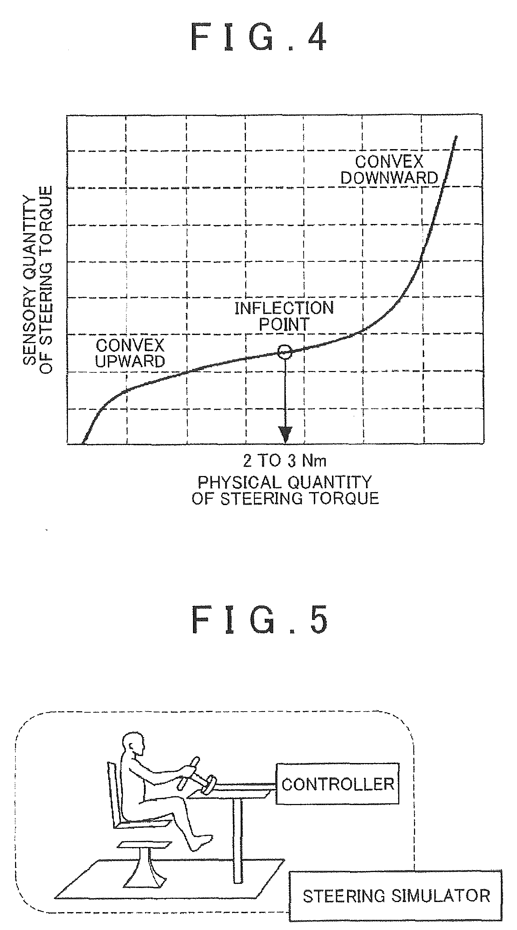

The correlation between a physical quantity of a steering torque and a sensory quantity of the steering torque is obtained by a magnitude estimation method as shown in FIG. 4. In the magnitude estimation method, the steering torque is variously changed and then the magnitude of a physical quantity felt at each time is answered in numerical value. That is, the sensory quantity monotonously increases against the physical quantity; however, the sensory quantity shifts from a convex upward curve to a convex downward curve at a certain region. The steering torque at the inflection point ranges about 2 to 3 Nm. The number of test subjects was three, and the result of each of the test subjects also indicated the same tendency. For research, a steering simulator that is able to freely change the steering reaction force characteristic (the correlation between a steering angle and a steering torque) as shown in FIG. 5 was used.

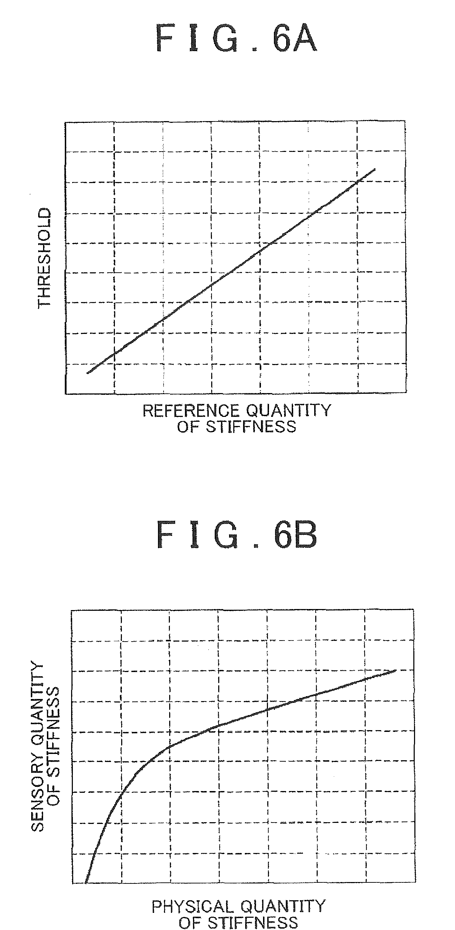

The correlation between a physical quantity of a stiffness and a sensory quantity of the stiffness is obtained using a method of limits as shown in FIG. 6A. In the method of limits, a stiffness is gradually varied from a reference stiffness, a variation (threshold) at which it is possible to sense the change for the first time is determined. This proportional correlation is a tendency that is well-known as Weber's law. When this proportional correlation holds, the fact that the sensory quantity is directly proportional to the logarithm of the physical quantity is known as the Weder-Fechner law. This correlation is shown in FIG. 6B. The number of test subjects was five, and the result of each of the test subjects also indicated the same tendency. In addition, the sensory quantity of the stiffness was defined to be directly proportional to the logarithm of the physical quantity of the stiffness.

Next, the correlation between a sensory quantity of a steering torque and a sensory quantity of a stiffness in which a resistance does not unnaturally fluctuate will be described.

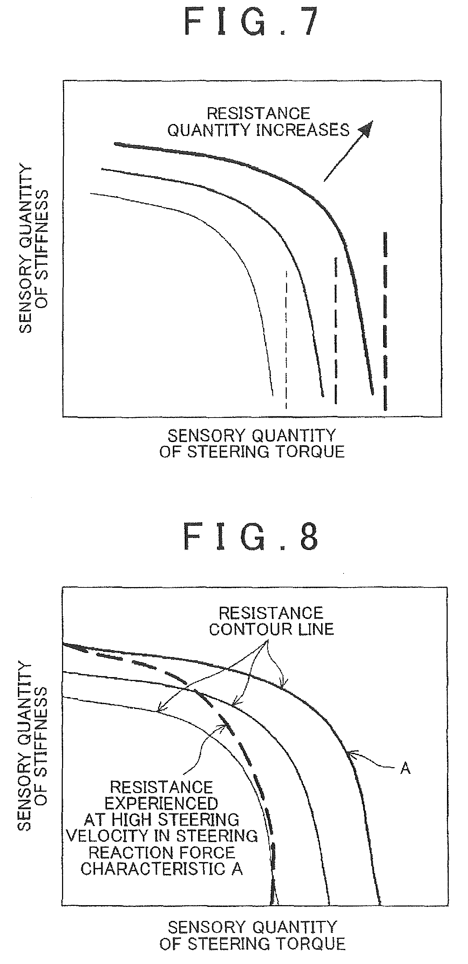

As a result of determining the correlation between a steering torque and a stiffness, at which the same resistance is experienced, with the use of the above-described steering simulator, it was found that the stiffness monotonously reduces against the steering torque when the sensory quantities of them are compared with each other and the sensory quantity of the steering torque is asymptotic so as to saturate at a certain constant value. As shown in FIG. 7, the above tendency is the same even when a reference combination is changed, and, when a reference resistance is large, the asymptotic line shifts rightward. When the steering torque and the stiffness have a steering reaction force characteristic (the correlation between a steering torque and a steering angle) having such a correlation, it is presumable that the driver is able to perform steering operation with a uniform resistance.

Next, resistance contour lines for each steering velocity will be described. It was found that, in the steering reaction force characteristic having the correlation between a steering torque and a stiffness, shown in FIG. 7, at which the same resistance is experienced, a smaller resistance is experienced in the case where the steering velocity is high (FIG. 8). Thus, when a target characteristic of a steering angle and a resistance is set, in order to obtain a steering torque at which it is possible to achieve a target even when the steering velocity is variously changed, it is necessary to clarify the correlation between a steering torque and a stiffness in consideration of a steering velocity as well.

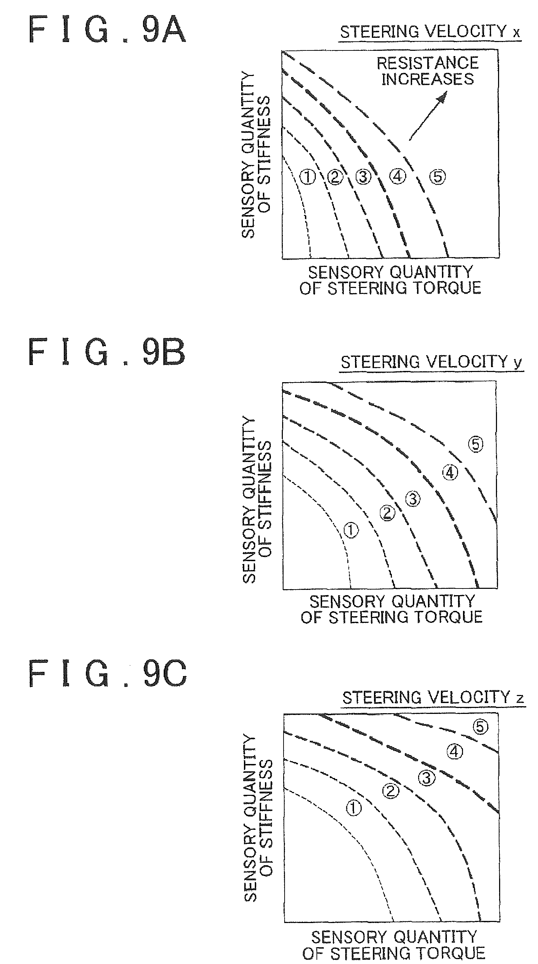

Then, through a method of correcting a steering torque on the basis of a steering velocity, the correlation between a steering torque and a stiffness, at which the same resistance is experienced even when the steering velocity is different, was obtained (FIG. 9A to FIG. 9C). In FIG. 9A to FIG 9C, resistance contour lines having the same number are characteristics that the same resistance is experienced even when the steering velocity varies among x, y, z (x < y < z). From this result, it is found that, as the steering velocity increases, the contour lines that the same resistance is experienced shift toward an upper-right side, that is, in the correlation between a sensory quantity of a steering torque and a sensory quantity of a stiffness in the case where a steering velocity is not taken into consideration, contour lines shift toward a side at which a resistance increases.

By utilizing the resistance contour lines shown in FIG. 9A to FIG. 9C, it is possible to implement a set target correlation between a resistance and a steering torque even when a steering velocity varies.

Next, a target correlation between a steering torque and a resistance quantity in the present embodiment will be described.

For the target correlation between a steering torque and a resistance quantity, a resistance quantity that is experienced such that the resistance quantity agrees to a sensorial characteristic is determined for each steering torque in association with a steering reaction force characteristic at the time when the steering wheel is turned from the neutral position at each steering velocity with the use of the above-described steering simulator. By so doing, a target correlation at each steering velocity between a steering torque and a resistance quantity is obtained.

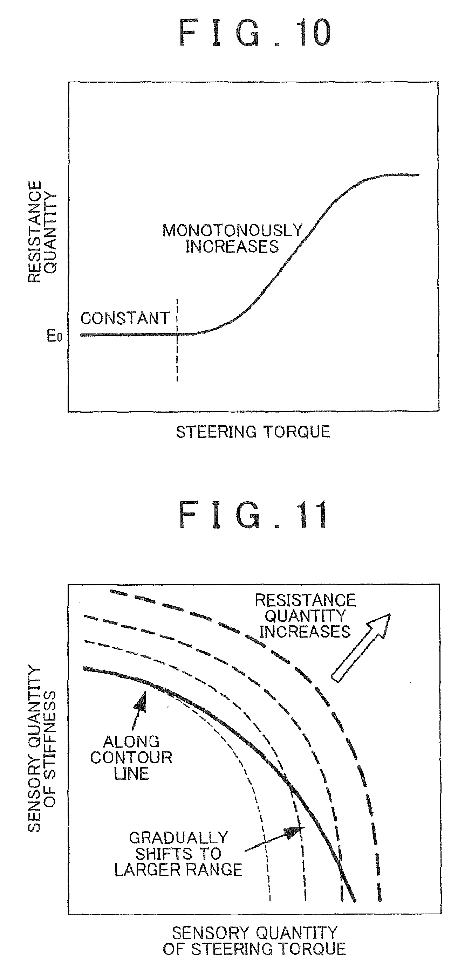

For example, in association with the steering reaction force characteristic at the time when the steering wheel is turned from the neutral position, as shown in FIG. 10, the steering reaction force characteristic is set using the correlation at each steering velocity between a steering torque and a resistance quantity. The correlation at each steering velocity between a steering torque and a resistance quantity is set such that a resistance quantity is constant in a range in which the steering torque is small and the resistance quantity monotonously increases with an increase in steering torque in a range in which the steering torque is large. The resistance quantity is defined by a sensory quantity of a rate of a variation (stiffness) in steering torque with respect to a variation in steering angle and a sensory quantity of a steering torque.

As shown in FIG. 11, gradually increasing the resistance quantity with an increase in steering torque is possible by gradually shifting the resistance contour lines with an increase in the sensory quantity of the steering torque. In addition, as shown in FIG. 4, in a range in which the steering torque is large, the sensory quantity acceleratingly increases with an increase in physical quantity, so the resistance quantity excessively increases unless the nonlinearity is taken into consideration. Therefore, in a range in which the sensory quantity acceleratingly increases with an increase in physical quantity, it is the key factor to define the resistance quantity in consideration of this nonlinearity, and, as shown in FIG. 10, it is desirable to smoothly increase the resistance quantity such that the resistance quantity does not steeply vary with a variation in steering torque.

At the neutral position of the steering wheel, both the steering angle and the steering torque are zero, so the resistance quantity at the time of start of steering operation is E0.

Thus, in the present embodiment, control for achieving a target steering torque on the basis of the correlation at each steering velocity between a steering angle and a steering torque (steering reaction force characteristic map). The correlation at each steering velocity between a steering angle and a steering torque is determined on the basis of the correlation between a steering torque and a resistance quantity. The correlation between a steering torque and a resistance quantity is determined for each steering velocity such that the resistance quantity monotonously increases with an increase in steering torque at the time when the steering wheel 16 is being steered from the neutral state without changing the steering direction.

The steering state determination unit 40 determines whether the steering wheel 16 is in the neutral state (straight ahead state) and whether the steering wheel 16 is in the steered state on the basis of the steering angle signal input from the steering angle sensor 26, and stores the result in a memory (not shown). In addition, when the steering wheel 16 is in the steered state, the steering state determination unit 40 determines in which steering direction the steering wheel 16 is steered, and stores the steering direction in the memory.

The steering state determination unit 40 determines whether the steering wheel 16 is in a one-way steered state where the steering wheel 16 is being steered from the neutral state (straight ahead state) without changing the steering direction on the basis of time-sequence data of determined results until the present state.

The steering direction of the steering wheel 16 is determined on the basis of the steering angle that is detected by the steering angle sensor 26. For example, the steering direction of the steering wheel 16 is determined on the basis of the sign of a difference between the previously input steering angle and the currently input steering angle, that is, whether the difference is positive or negative.

The steering velocity detection unit 41 calculates a temporal variation in steering angle (steering velocity) on the basis of the steering angle signal input from the steering angle sensor 26. A temporal variation in steering angle may be obtained by providing a sensor that measures a steering velocity.

The target map storage unit 42 prestores the first map for a one-way steered state at each steering velocity as shown in FIG. 10. The first map shows the correspondence correlation at the corresponding steering velocity between a steering torque and a steering angle. The correspondence correlation at the corresponding steering velocity is preset through a method (described later) on the basis of the correlation at the corresponding steering velocity between a steering torque and a resistance quantity. In addition, the target map storage unit 42 prestores the second map for a state other than the one-way steered state. The second map shows the correspondence correlation between a steering angle and a steering torque, which is predetermined such that the steering toque increases as the steering angle increases as shown in FIG. 3. The second map shows the existing known correspondence correlation of a steering torque against a steering angle.

The target torque setting unit 44, when it is determined that the steered state is the one-way steered state, sets the steering torque corresponding to the detected steering angle and the detected steering velocity as a target steering torque on the basis of the steering angle signal input from the steering angle sensor 26 and the first map corresponding to the steering velocity detected by the steering velocity detection unit 41. The target torque setting unit 44, when it is determined that the steered state is other than the one-way steered state, sets the steering torque corresponding to the detected steering angle as a target steering torque on the basis of the steering angle signal input from the steering angle sensor 26 and the stored second map.

The assist control unit 46 calculates the amount of increase or reduction in steering torque with respect to the target steering torque by comparing the set target steering torque with the steering torque detected by the steering torque sensor 28, and computes a command torque assist amount. In addition, the assist control unit 46 executes drive control over the electric power steering motor 24 on the basis of the computed command torque assist amount such that the steering torque that acts on the steering wheel 16 becomes the target steering torque. For drive control over the electric power steering motor 24 here, for example, proportional plus integral (PI) control based on a deviation between the target steering torque and the detected steering torque may be used.

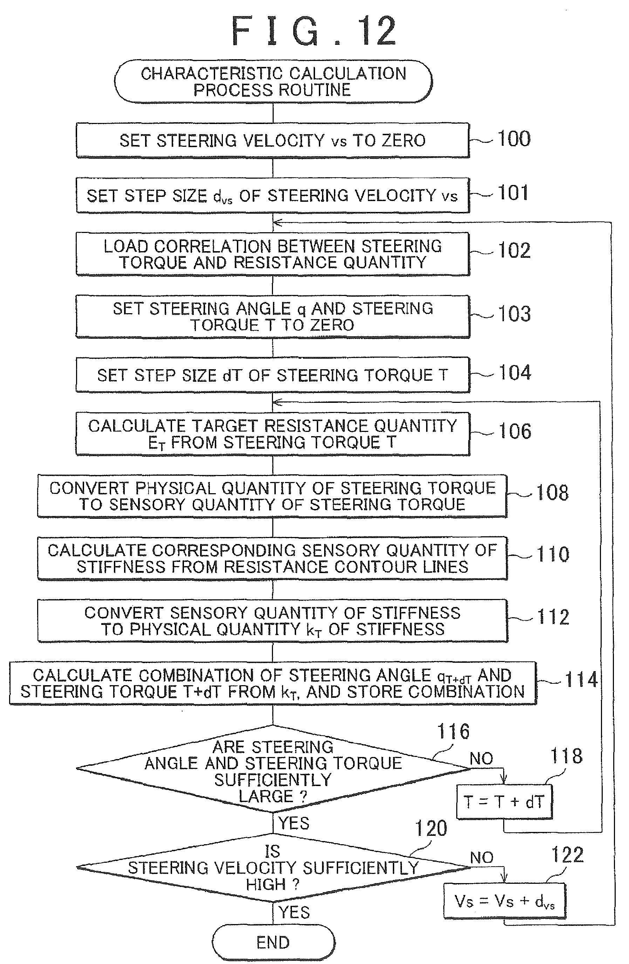

Next, the operation of the vehicle control system 10 according to the first embodiment will be described. First, a characteristic calculation process routine shown in FIG. 12 is executed off-line in the computer 30. The characteristic calculation process routine may be executed in an external device.

Initially, in step 100, a steering velocity vs is set to zero. Subsequently, in step 101, a step size $d_{vs}$ of the steering

velocity is set to a predetermined value. Then, in step 102, the correlation at the steering velocity vs between a steering torque and a resistance quantity, which is stored in the memory (not shown), as shown in FIG. 10, is loaded, and, in step 103, a steering angle q and a steering torque T are set to zero. After that, in step 104, a step size dT of the steering torque is set to a predetermined value.

In step 106, a target resistance quantity $E_T$ corresponding to the steering torque T is calculated on the basis of the loaded correlation at the steering velocity vs between a steering torque and a resistance quantity. For example, when the steering torque T is zero, a target resistance quantity E0 is calculated. In subsequent step 108, the physical quantity T of the steering torque is converted to the sensory quantity of the steering torque.

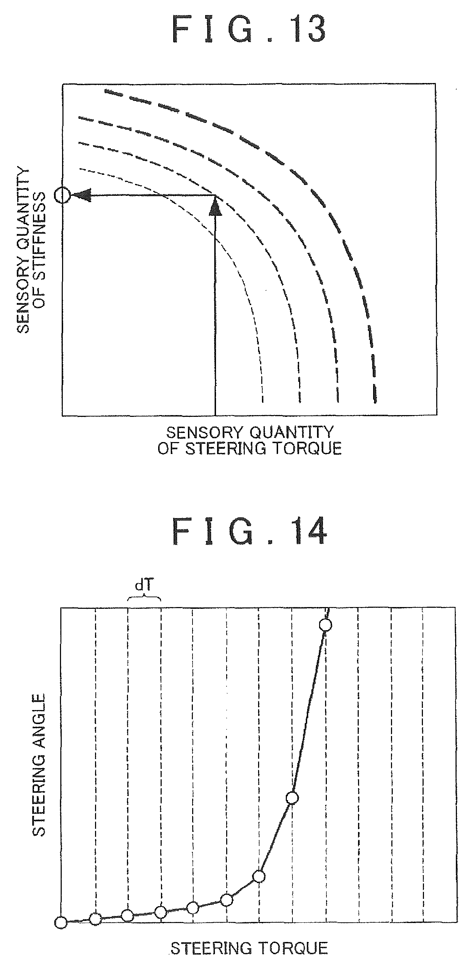

In step 110, using the resistance contour line map that shows the correlation at the steering velocity vs between a sensory quantity of the steering torque and a sensory quantity of the stiffness in which the resistance quantity is a constant value, which is stored in the memory, as shown in FIG. 13, the sensory quantity of the stiffness, which corresponds to the target resistance quantity $E_T$ calculated in step 106 and the sensory quantity of the steering torque, calculated in step 108, is calculated through reverse lookup of the map.

In step 112, the sensory quantity of the stiffness, which is calculated in step 110, is converted to a physical quantity $k_T$ of the stiffness. For example, when the steering torque T is zero, , a physical quantity k0 of the stiffness is obtained.

In subsequent step 114, a combination of a steering angle $q_{T+dT}$ and a steering torque T+dT is calculated from the physical quantity $k_T$ of the stiffness, which is calculated in step 112, in accordance with the following mathematical expression (1), and is stored in the memory as a combination corresponding to the steering velocity vs.

$$q_{T+dT} = \int_{T}^{T+dT} \frac{1}{k_T} dT + q_T \qquad \cdots (1)$$

For example, a combination of a steering torque and a steering angle is calculated such that the stiffness in the case where the steering torque T is close to zero is k0.

The steering angle q is updated to the steering angle $q_{T+dT}$ calculated with the use of the above mathematical expression (1).

In step 116, it is determined whether the steering angle and the steering torque are sufficiently large. When the steering angle and the steering torque are sufficiently large, it is determined that the correspondence correlation at the steering velocity vs in all the range between a steering torque and a steering angle is obtained, and then the process proceeds to step 120. On the other hand, when the steering angle and the steering torque are not sufficiently large, the steering torque T is increased by the step size dT in step 118, and the process returns to step 106.

In step 120, it is determined whether the steering velocity vs is sufficiently high. When the steering velocity vs is sufficiently high, it is determined that the correspondence correlation at the steering velocity vs in all the range between a steering torque and a steering angle is obtained, and then the characteristic calculation process routine ends. On the other hand, when the steering velocity vs is not sufficiently high, the steering velocity vs is increased by the step size $d_{vs}$ in step 122, and the process returns to step 102.

As described above, in the characteristic calculation process routine, by gradually increasing the steering torque in the step size dT, a corresponding combination of the steering torque and the steering angle is calculated, and the first map is created on the basis of the calculated correspondence correlation in all the range between a steering torque and a steering angle. For example, as shown in FIG. 14, corresponding steering angles (see the open-circle points in FIG. 14) are respectively obtained for the step sizes dT of the steering torque, so the first map is generated by linearly interpolating the obtained steering angles. In addition, by gradually increasing the steering velocity $d_{vs}$ in the step size $d_{vs}$, the first map for the steering velocity vs is generated for each step size $d_{vs}$ of the steering velocity. A cubic spline may be used as an interpolation method. The thus generated first map for each steering velocity vs is stored in the target map storage unit 42, and the steering reaction force characteristic is controlled using the first map corresponding to the detected steering velocity vs. By so doing, it is possible to implement the correlation at any steering velocity vs between a desired steering torque and a resistance.

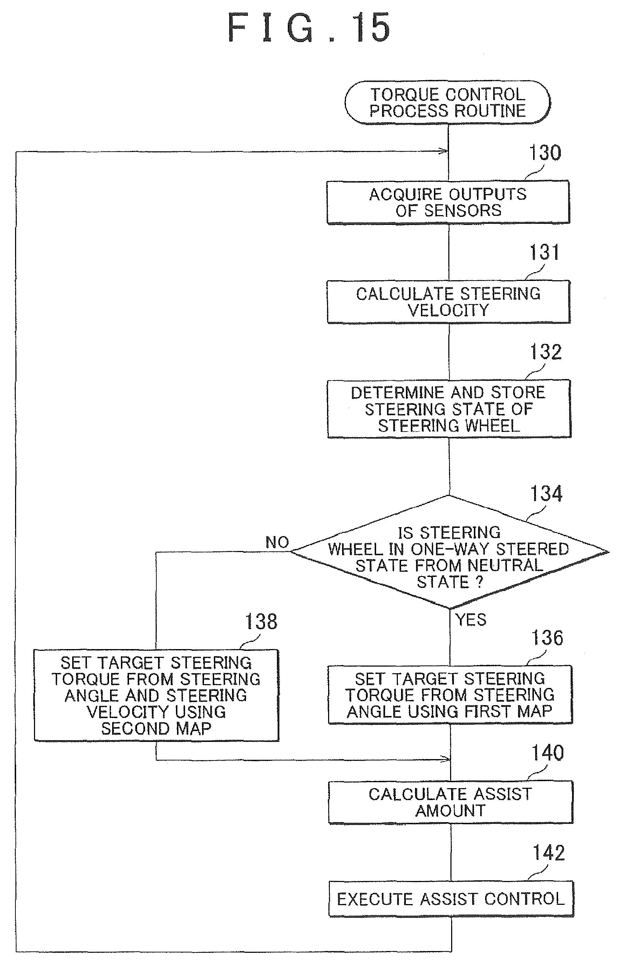

Next, while the vehicle equipped with the vehicle control system 10 is travelling, a torque control process routine shown in FIG. 15 is executed in the computer 30.

First, in step 130, a steering torque signal is acquired from the steering torque sensor 28, and a steering angle signal is acquired from the steering angle sensor 26. In subsequent step 131, a steering velocity is calculated on the basis of the steering angle signal acquired in step 130. In step 132, it is determined whether the steering wheel 16 is in the neutral state or the steered state on the basis of the steering angle signal acquired in step 130, and it is determined in which steering direction the steering wheel 16 is steered, and the determined results are stored in the memory (not shown).

In step 134, it is determined whether the steering wheel 16 is in the one-way steered state where the steering wheel 16 is being steered from the neutral state without changing the steering direction on the basis of time-sequence data of the results determined in step 132. When it is determined that the steering wheel 16 is in the one-way steered state, in step 136, the first map for the steering velocity calculated in step 131 is loaded from the target map storage unit 42, the steering torque corresponding to the steering angle indicated by the steering angle signal acquired in step 130 is set as a target steering torque, and then the process proceeds to step 140.

On the other hand, when it is determined in step 134 that the steering wheel 16 is not in the one-way steered state, in step 138, the second map is loaded from the target map storage unit 42, the steering torque corresponding to the steering angle indicated by the steering angle signal acquired in step 130 is set as a target steering torque, and then the process proceeds to step 140.

In step 140, a command torque assist amount is calculated on the basis of the steering torque indicated by the steering torque signal acquired in step 130 and the target steering torque set in step 136 or step 138. In step 142, the electric power steering motor 24 is subjected to drive control on the basis of the command torque assist amount calculated in step 140 such that the steering torque that acts on the steering wheel 16 becomes the target steering torque.

As described above, with the vehicle control system according to the first embodiment, when the steering wheel is being steered from the neutral state without changing the steering direction, by executing control using a set target steering torque such that the correlation at each steering velocity between a steering torque and a resistance quantity, which matches a driver's sensorial characteristic, is achieved. By so doing, it is possible to apply a steering reaction force characteristic (the degree of a variation in reaction force and stiffness during steering operation) that matches the driver's sensorial characteristic in association with a steering torque (reaction force) and a stiffness in response to any steering velocity, so the handling and stability of the vehicle and driver's steering feel improve.

Next, a vehicle control system according to a second embodiment will be described. The vehicle control system according to the second embodiment has a similar configuration to that of the first embodiment, so like reference numerals denote the same components and the description thereof is omitted.

The second embodiment differs from the first embodiment in that a first map is created on the basis of the correlation between a steering angle and a resistance quantity, which is set on the basis of a driver's sensorial characteristic.

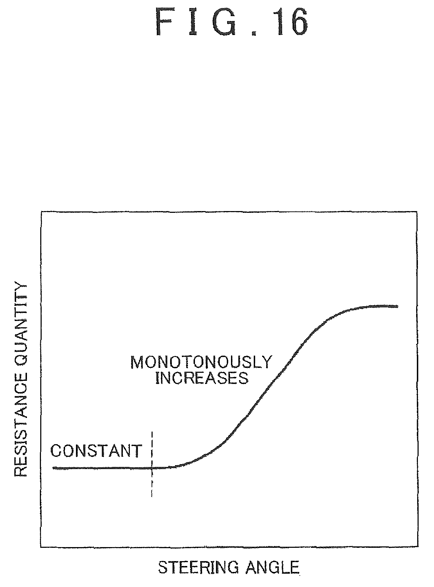

In the second embodiment, in association with the steering reaction force characteristic at the time when the steering wheel is turned from the neutral position, as shown in FIG. 16, the steering reaction force characteristic (the correspondence correlation between a steering angle and a steering torque) at each steering velocity is set using the correlation at each steering velocity between a steering angle and a resistance quantity. The correlation at each steering velocity between a steering angle and a resistance quantity is set such that a resistance quantity is constant in a range in which the steering angle is small and the resistance quantity monotonously increases with an increase in steering angle in a range in which the steering angle is large. The resistance quantity is defined by a sensory quantity of a rate of a variation (stiffness) in steering torque with respect to a variation in steering angle and a sensory quantity of a steering torque.

Thus, in the present embodiment, control for achieving a target steering torque on the basis of the correlation at each steering velocity between a steering angle and a steering torque (steering reaction force characteristic map), which is determined on the basis of the correlation at each steering velocity between a steering angle and a resistance quantity. The correlation at each steering velocity between a steering angle and a resistance quantity is determined such that the resistance quantity is constant in a range in which the steering angle is smaller than a predetermined value and the resistance quantity monotonously increases with an increase in steering angle in a range in which the steering angle is larger than or equal to the predetermined value at the time when the steering wheel 16 is being steered from the neutral state without changing the steering direction.

The target map storage unit 42 prestores the first map for a one-way steered state at each steering velocity as shown in FIG. 16. The first map shows the correspondence correlation between a steering torque and a steering angle, which is preset on the basis of the correlation at the corresponding steering velocity between a steering angle and a resistance quantity.

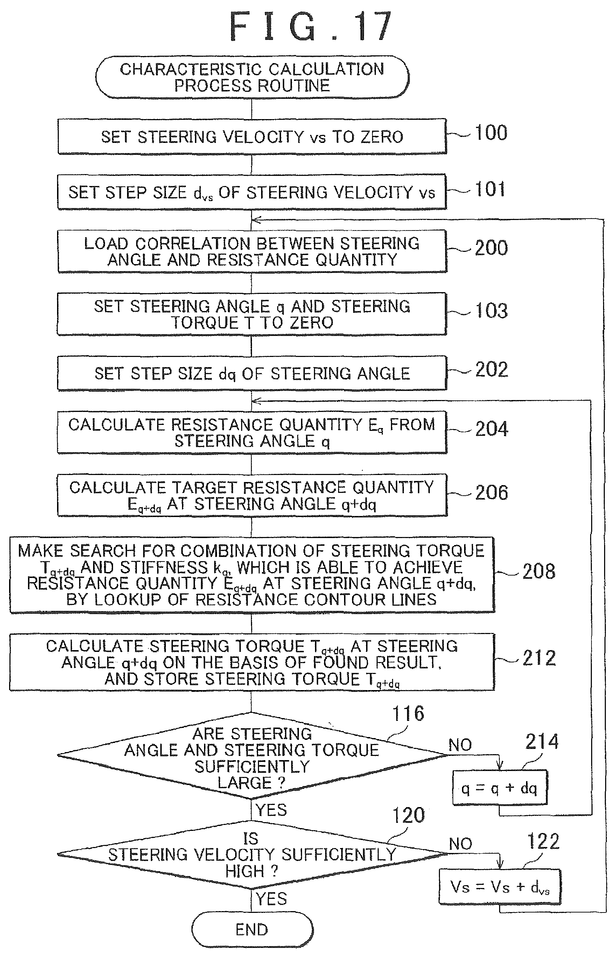

Next, a characteristic calculation process routine according to the second embodiment will be described with reference to FIG. 17. Like reference numerals denote similar processes to those of the first embodiment, and the detailed description is omitted,

Initially, in step 100, a steering velocity vs is set to zero. Subsequently, in step 101, a step size $d_{vs}$ of the steering velocity is set to a predetermined value. Then, in step 200, the correlation at the steering velocity vs between a steering angle and a resistance quantity, which is stored in the memory (not shown), as shown in FIG. 16, is loaded, and, in step 103, a steering angle q and a steering torque T are set to zero. Subsequently, in step 200, a step size dq of the steering angle is set to a predetermined value.

In step 204, a resistance quantity $E_q$ corresponding to the steering angle q is calculated on the basis of the loaded correlation at the steering velocity vs between a steering angle and a resistance quantity, and, in step 206, a target resistance quantity $E_{q+dq}$ corresponding to the steering angle q+dq is calculated.

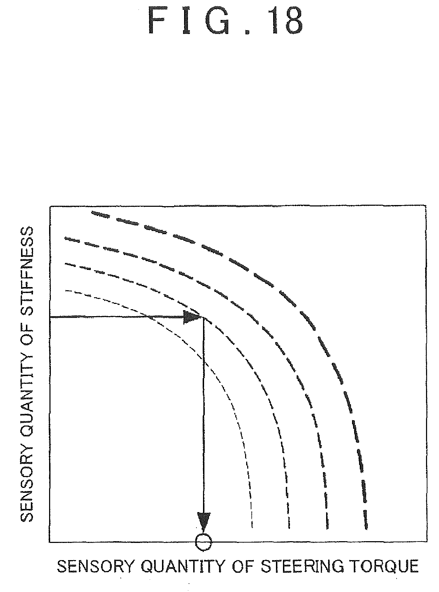

In step 208, using the resistance contour line map that shows the correlation at the steering velocity vs between a sensory quantity of the steering torque and a sensory quantity of the stiffness in which the resistance quantity is a constant value and that is stored in the memory, as shown in FIG. 18, a combination of the sensory quantity of a stiffness kq and the sensory quantity of the steering torque $T_{q+dq}$, which achieves the target resistance quantity $E_{q+dq}$ calculated in step 206, is obtained through reverse lookup of the map. Then, a search for an appropriate stiffness $k_q$ for adequately varying the resistance from $E_q$ to $E_{q+dq}$ while the steering angle increases by dq is made using a convergence calculation method, such as Newton's method, and a steering torque $T_{q+dq}$ that is combined with the found stiffness $k_q$ is obtained by consulting each combination of the sensory quantity of the obtained stiffness $k_q$ and the sensory quantity of the steering torque $T_{q+dq}$. At this time, conversion between the sensory quantity of the steering torque and the physical quantity $T_{q+aq}$ of the steering torque and conversion between the sensory quantity of the stiffness and the physical quantity kq of the stiffness are made by the above-described method.

In subsequent step 212, a steering torque $T_{q+dq}$ is calculated from the physical quantity $T_{q+dq}$ of the steering torque and the stiffness kq, found in step 208, in accordance with the following mathematical expression (2), and a combination of the steering angle q+dq and the calculated steering torque $T_{q+aq}$ is stored in the memory as a combination corresponding to the steering velocity vs.

$$T_{q+dq} = k_q \cdot dq + T_q \qquad \cdots (2)$$

The steering torque T is updated to the steering torque $T_{q+dq}$ calculated with the use of the above mathematical expression (2).

In step 116, it is determined whether the steering angle q and the steering torque T are sufficiently large. When the steering angle q and the steering torque T are sufficiently large, it is determined that the correspondence correlation at the steering velocity vs in all the range between a steering torque and a steering angle is obtained, and then the process proceeds to step 120. On the other hand, when the steering angle q and the steering torque T are not sufficiently large, the steering angle q is increased by the step size dq in step 214, and the process returns to step 204.

In step 120, it is determined whether the steering velocity vs is sufficiently high. When the steering velocity vs is sufficiently high, it is determined that the correspondence correlation at the steering velocity vs in all the range between a steering torque and a steering angle is obtained, and then the characteristic calculation process routine ends. On the other hand, when the steering velocity vs is not sufficiently high, the steering velocity vs is increased by the step size $d_{vs}$ in step 122, and the process returns to

step 200.

As described above, in the characteristic calculation process routine, by gradually increasing the steering angle in the step size dq, a corresponding combination of the steering torque and the steering angle is calculated, and the first map is created on the basis of the calculated correspondence correlation in all the range between a steering torque and a steering angle. For example, corresponding steering torques are respectively obtained for the step sizes dq of the steering angle, so the first map is generated by linearly interpolating the obtained steering torques. In addition, by gradually increasing the steering velocity $d_{vs}$ in the step size $d_{vs}$, the first map for the steering velocity vs is generated for each step size $d_{vs}$ of the steering velocity. The thus generated first map for each steering velocity vs is stored in the target map storage unit 42.

The other configuration and operation of the vehicle control system according to the second embodiment are similar to those of the first embodiment, so the description is omitted.

In this way, when the steering wheel is being steered from the neutral state without changing the steering direction, by executing control using a set target steering torque such that the correlation at each steering velocity between a steering angle and a resistance quantity, which matches a driver's sensorial characteristic, is achieved. By so doing, it is possible to apply a steering reaction force characteristic (the degree of a variation in reaction force and stiffness during steering operation) that matches the driver's sensorial characteristic in association with a steering torque (reaction force) and a stiffness in response to any steering velocity, so the handling and stability of the vehicle and driver's steering feel improve.

In the above-described first and second embodiments, the description is made on the example in which, in a state other than the one-way steered state, a target steering torque is set using the second map that shows the existing known correspondence correlation between a steering angle and a steering torque; however, it is not limited to this configuration. In a state other than the one-way steered state, control may be executed such that a previously calculated command torque assist amount is held. When the steering direction is changed, control may be executed such that a command torque assist amount is reduced on the basis of the amount of return of the steering angle.

Next, a third embodiment will be described. Description will be made on an example in which the invention is applied to a vehicle control system for a steer-by-wire system. Like reference numerals denote similar components to those of the first embodiment and the description thereof is omitted.

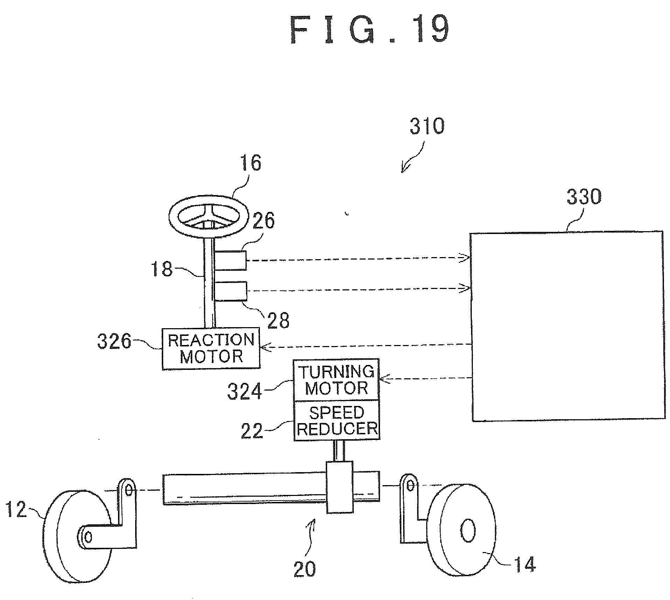

As shown in FIG. 19, the vehicle control system 310 according to the third embodiment includes the steering wheel 16, the steering shaft 18, the rack-and-pinion mechanism 20, the steering angle sensor 26, the steering torque sensor 28 and a computer 330. The vehicle control system 310 further includes a reaction motor 326 and a turning motor 324. The reaction motor 326 simulates a steering torque by causing torque to act on the steering wheel 16 in response to driver's steering operation of the steering wheel 16. The turning motor 324 transmits an output torque for changing the steered angle of the steered wheels 12 and 14 on the basis of the steering angle of the steering wheel 16 to the rack-and-pinion mechanism 20 via the speed reducer 22 and then outputs the torque to the steered wheels 12 and 14.

The computer 330, as in the case of the first embodiment, executes drive control over the reaction motor 326 such that a target steering torque set on the basis of the first map or the second map for each steering velocity is achieved. In addition, the computer 330 executes drive control over the turning motor 324 such that the steered angle of the steered wheels 12 and 14 is changed on the basis of the steering angle of the steering wheel 16, which is detected by the steering angle sensor 26.

The other configuration and operation of the vehicle control system according to the third embodiment are similar to those of the first embodiment, so the description is omitted.

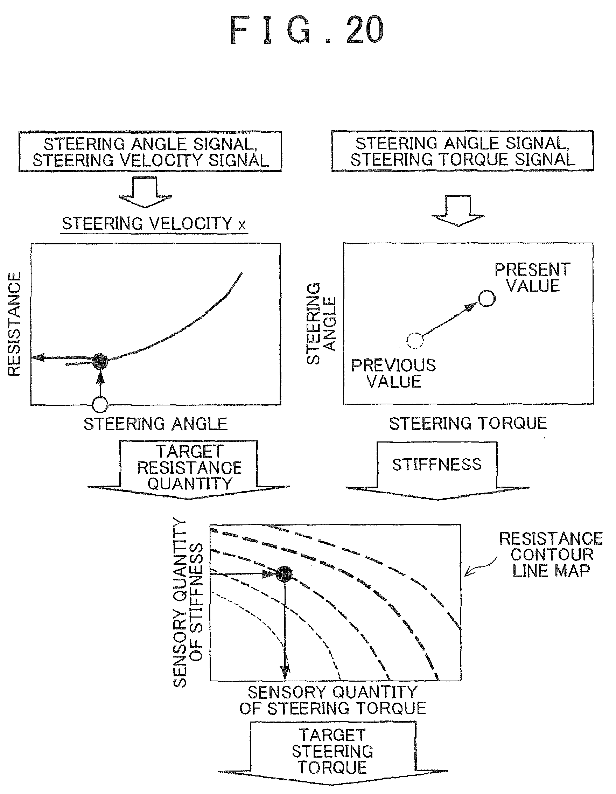

In the above-described first to third embodiments, the description is made on the example in which the correspondence correlation at each steering velocity between a steering angle and a target steering torque is obtained off-line in advance; however, it is not limited to this configuration. A target steering torque corresponding to the detected steering velocity and steering angle may be obtained on-line. In this case, as shown in FIG. 20, a target resistance quantity corresponding to a detected steering angle signal is calculated from the correspondence correlation at a detected steering velocity signal between a steering angle and a resistance quantity, which is stored in the memory. A stiffness (the ratio of a variation in steering torque to a variation in steering angle) is calculated from the detected steering angle signal and the detected steering torque signal. A target steering torque (a steering torque by which it is possible to achieve a target resistance at a present steering velocity) is obtained from the calculated target resistance quantity, the calculated stiffness and the resistance contour line map corresponding to the detected steering velocity.

Torque is caused to act on the steering wheel by the torque of the electric power steering motor or the torque of the reaction motor; instead, other than the electric power steering motor or the reaction motor, torque may be caused to act on the steering wheel with the use of another actuator, such as a variable steering gear ratio system actuator.

The description is made on the example in which the invention is applied to the vehicle control system equipped for a vehicle; instead, the invention may be applied to a steering simulating system that simulates steering operation of a vehicle. For example, it is applicable that drive simulation is carried out by, in a state where an operator is seated on a vehicle seat (not shown) provided for the steering simulating system, executing operation such that the steering wheel is steered and displaying a video image showing a visual range from a driver on the display screen of a display. In this case, the steering simulating system just needs to be configured to include the steering wheel 16, the steering shaft 18, the steering angle sensor 26, the steering torque sensor 28, the reaction motor 326 and the computer 330 in the above-described third embodiment. The computer 330 just needs to execute drive control over the reaction motor 326 and control a screen image on the display that shows a video image showing a visual range from a driver for the operator on the basis of outputs from the steering torque sensor 28 and the steering angle sensor 26.

The description is made on the example in which, in the correlation between a steering torque or steering angle and a resistance quantity, the resistance quantity is set so as to be constant in a range in which the steering torque or the steering angle is smaller than a predetermined value; however, it is not limited to this configuration. The resistance quantity just needs to be set so as to be substantially constant.

The description is made on the example in which the sensory quantity of the stiffness is defined to be directly proportional to the logarithm of the physical quantity of the stiffness; however, it is not limited to this configuration. The sensory quantity of the stiffness may be defined to be substantially directly proportional to the logarithm of the physical quantity of the stiffness.

The description is made on the example in which a target steering torque corresponding to a detected steering angle is obtained using the map that shows the correspondence correlation between a steering torque and a steering angle; however, it is not limited to this configuration. A target steering torque may be calculated from a detected steering angle in accordance with a mathematical expression that expresses the correspondence correlation between a steering torque and a steering angle.

The program according to the invention may be provided by storing the program in a storage medium.

**Claims**

1. A vehicle control system comprising:

   detecting means (26, 41) for detecting a steering angle of a steering wheel (16) and a steering velocity of the steering wheel (16) through driver's steering operation; and

   target setting means (44) for, when the steering wheel (16) is being steered from a neutral state of the steering wheel (16) without changing a steering direction, setting a steering torque corresponding to the detected steering angle and the detected steering velocity as a target steering torque, **characterized in that**

   the setting of the steering torque is executed on the basis of a preset correlation at each steering velocity between a resistance quantity of the driver and one of the steering angle and the steering torque, the resistance quantity being obtained on the basis of a sensory quantity of a rate of a variation in the steering torque with respect to a variation in the steering angle and a sensory quantity of the steering torque; and

   the vehicle control system further comprises control means (46) for executing control such that the target steering torque set by the target setting means (44) is achieved.

2. The vehicle control system according to claim 1, wherein the preset correlation between the resistance quantity and the one of the steering angle and the steering torque is set such that the resistance quantity increases with an increase in the one of the steering angle and the steering torque.

3. The vehicle control system according to claim 1 or 2, wherein
   the target setting means (44) sets the steering torque corresponding to the detected steering angle and the detected steering velocity as a target steering torque on the basis of a correspondence correlation at each steering velocity between the steering angle and the steering torque, the correspondence correlation being preset on the basis of the correlation at each steering velocity between the resistance quantity and the one of the steering angle and the steering torque.

4. The vehicle control system according to any one of claims 1 to 3, wherein
   the resistance quantity becomes constant when the sensory quantity of the rate of a variation in the steering torque with respect to a variation in the steering angle acceleratingly reduces with an increase in the sensory quantity of the steering torque.

5. The vehicle control system according to any one of claims 1 to 4, wherein
   the sensory quantity of the steering torque increases together with the steering torque, and an amount of increase in the sensory quantity of the steering torque with an increase in the steering torque changes from a gradually reducing tendency to a gradually increasing tendency.

6. The vehicle control system according to claim 5, wherein
   the steering torque at the time when the amount of increase with an increase in the steering torque changes from the gradually reducing tendency to the gradually increasing tendency ranges from 2 to 3 Nm.

7. The vehicle control system according to any one of claims 1 to 6, wherein
   the sensory quantity of the rate of a variation in the steering torque with respect to a variation in the steering angle is directly proportional to the logarithm of the rate of a variation in the steering torque with respect to a variation in the steering angle.

8. The vehicle control system according to any one of claims 1 to 7, wherein
   the control means (46) executes control such that a torque assist amount, which corresponds to the target steering torque set by the target setting means (44), or the set target steering torque is generated.

9. A steering simulating system comprising:

   detecting means (26, 41) for detecting a steering angle of a steering wheel (16) and a steering velocity of the steering wheel (16) through driver's steering operation; and

   target setting means (44) for, when the steering wheel (16) is being steered from a neutral state of the steering wheel (16) without changing a steering direction, setting a steering torque corresponding to the detected steering angle and the detected steering velocity as a target steering torque, **characterized in that**

   the setting of the steering torque is executed on the basis of a preset correlation at each steering velocity between a resistance quantity of the driver and one of the steering angle and the steering torque, the resistance quantity being obtained on the basis of a sensory quantity of a rate of a variation in the steering torque with respect to a variation in the steering angle and a sensory quantity of the steering torque; and

the steering simulating system further comprises control means (46) for executing control such that the target steering torque set by the target setting means (44) is achieved.

**10.** A steering torque application method comprising:

detecting a steering angle of a steering wheel (16) and a steering velocity of the steering wheel (16) through driver's steering operation; and

when the steering wheel (16) is being steered from a neutral state of the steering wheel (16) without changing a steering direction, setting a steering torque corresponding to the detected steering angle and the detected steering velocity as a target steering torque, **characterized in that**

the setting of the steering torque is executed on the basis of a preset correlation at each steering velocity between a resistance quantity of the driver and one of the steering angle and the steering torque, the resistance quantity being obtained on the basis of a sensory quantity of a rate of a variation in the steering torque with respect to a variation in the steering angle and a sensory quantity of the steering torque; and

the steering torque application method further comprises executing control such that the set target steering torque is achieved.

**11.** A non-transitory computer-readable storage medium storing a program for causing a computer to execute a method, wherein the method comprises:

detecting a steering angle of a steering wheel (16) and a steering velocity of the steering wheel (16) through driver's steering operation; and

when the steering wheel (16) is being steered from a neutral state of the steering wheel (16) without changing a steering direction, setting a steering torque corresponding to the detected steering angle and the detected steering velocity as a target steering torque, **characterized in that**

the setting of the steering torque is executed on the basis of a preset correlation at each steering velocity between a resistance quantity of the driver and one of the steering angle and the steering torque, the resistance quantity being obtained on the basis of a sensory quantity of a rate of a variation in the steering torque with respect to a variation in the steering angle and a sensory quantity of the steering torque; and

the method further comprises executing control such that the set target steering torque is achieved.

**12.** A program for causing a computer to execute a method, wherein the method comprises:

detecting a steering angle of a steering wheel (16) and a steering velocity of the steering wheel (16) through driver's steering operation; and

when the steering wheel (16) is being steered from a neutral state of the steering wheel (16) without changing a steering direction, setting a steering torque corresponding to the detected steering angle and the detected steering velocity as a target steering torque, **characterized in that**

the setting of the steering torque is executed on the basis of a preset correlation at each steering velocity between a resistance quantity of the driver and one of the steering angle and the steering torque, the resistance quantity being obtained on the basis of a sensory quantity of a rate of a variation in the steering torque with respect to a variation in the steering angle and a sensory quantity of the steering torque; and

the method further comprises executing control such that the set target steering torque is achieved.

**Patentansprüche**

**1.** Fahrzeugsteuerungssystem mit:

einem Erfassungsmittel (26, 41) zum Erfassen eines Lenkwinkels eines Lenkrads (16) und einer Lenkgeschwindigkeit des Lenkrads (16) durch eine Lenkbetätigung eines Fahrers; und

einem Zieleinstellungsmittel (44) zum, wenn das Lenkrad (16) von einem Neutralzustand des Lenkrads (16) ohne Veränderung einer Lenkrichtung gelenkt ist, Einstellen eines Lenkmoments entsprechend dem erfassten Lenkwinkel und der erfassten Lenkgeschwindigkeit als ein Ziellenkmoment, **dadurch gekennzeichnet, dass** das Einstellen des Lenkmoments basierend auf einer voreingestellten Korrelation bei jeder Lenkgeschwindigkeit zwischen einer Widerstandshöhe des Fahrers und dem Lenkwinkel oder dem Lenkmoment ausgeführt ist, wobei die Widerstandshöhe basierend auf einer sensorischen Menge einer Lenkmomentveränderungsrate in Bezug auf eine Lenkwinkelveränderung und einer sensorischen Menge des Lenkmoments erhalten ist; und das Fahrzeugsteuerungssystem ferner ein Steuerungsmittel (46) zum derartigen Ausführen einer Steuerung aufweist, dass das durch das Zieleinstellungsmittel (44) eingestellte Ziellenkmoment erreicht ist.

2. Fahrzeugsteuerungssystem nach Anspruch 1, wobei
die voreingestellte Korrelation zwischen der Widerstandshöhe und dem Lenkwinkel oder dem Lenkmoment derart eingestellt ist, dass sich die Widerstandshöhe mit einer Erhöhung des Lenkwinkels oder des Lenkmoments erhöht.

3. Fahrzeugsteuerungssystem nach Anspruch 1 oder 2, wobei
das Zieleinstellungsmittel (44) das Lenkmoment entsprechend dem erfassten Lenkwinkel und der erfassten Lenkgeschwindigkeit als ein Ziellenkmoment basierend auf einer Korrespondenz-Korrelation bei jeder Lenkgeschwindigkeit zwischen dem Lenkwinkel und dem Lenkmoment einstellt, wobei die Korrespondenz-Korrelation basierend auf der Korrelation bei jeder Lenkgeschwindigkeit zwischen der Widerstandshöhe und dem Lenkwinkel oder dem Lenkmoment voreingestellt ist.

4. Fahrzeugsteuerungssystem nach einem der Ansprüche 1 bis 3, wobei
die Widerstandshöhe konstant wird, wenn sich die sensorische Menge der Lenkmomentveränderungsrate in Bezug auf eine Lenkwinkelveränderung mit einer Erhöhung der sensorischen Menge des Lenkmoments beschleunigt verringert.

5. Fahrzeugsteuerungssystem nach einem der Ansprüche 1 bis 4, wobei
die sensorische Menge des Lenkmoments sich zusammen mit dem Lenkmoment erhöht, und sich ein Erhöhungsbetrag der sensorischen Menge des Lenkmoments mit einer Erhöhung des Lenkmoments von einer allmählichen Verringerungs-Tendenz zu einer allmählichen Erhöhungs-Tendenz verändert.

6. Fahrzeugsteuerungssystem nach Anspruch 5, wobei
das Lenkmoment zu der Zeit, wenn sich der Erhöhungsbetrag mit einer Erhöhung des Lenkmoments von der allmählichen Verringerungs-Tendenz zu der allmählichen Erhöhungs-Tendenz verändert, von 2 bis 3 Nm reicht.

7. Fahrzeugsteuerungssystem nach einem der Ansprüche 1 bis 6, wobei
die sensorische Menge der Lenkmomentveränderungsrate in Bezug auf eine Lenkwinkelveränderung direkt proportional zu dem Logarithmus der Lenkmomentveränderungsrate in Bezug auf eine Lenkwinkelveränderung ist.

8. Fahrzeugsteuerungssystem nach einem der Ansprüche 1 bis 7, wobei
das Steuerungsmittel (46) eine Steuerung derart ausführt, dass ein Drehmomentunterstützungsbetrag, der dem durch das Zieleinstellungsmittel (44) eingestellten Ziellenkmoment entspricht, oder das eingestellte Ziellenkmoment erzeugt ist.

9. Lenksimulationssystem mit:

einem Erfassungsmittel (26, 41) zum Erfassen eines Lenkwinkels eines Lenkrads (16) und einer Lenkgeschwindigkeit des Lenkrads (16) durch eine Lenkbetätigung eines Fahrers; und
einem Zieleinstellungsmittel (44) zum, wenn das Lenkrad (16) von einem Neutralzustand des Lenkwinkels (16) ohne Veränderung einer Lenkrichtung gelenkt ist, Einstellen eines Lenkmoments entsprechend dem erfassten Lenkwinkel und der erfassten Lenkgeschwindigkeit als ein Ziellenkmoment, **dadurch gekennzeichnet, dass** das Einstellen des Lenkmoments basierend auf einer voreingestellten Korrelation bei jeder Lenkgeschwindigkeit zwischen einer Widerstandshöhe des Fahrers und dem Lenkwinkel oder dem Lenkmoment ausgeführt ist, wobei die Widerstandshöhe basierend auf einer sensorischen Menge einer Lenkmomentveränderungsrate in Bezug auf eine Lenkwinkelveränderung und eine sensorische Menge des Lenkmoments erhalten ist; und das Lenksimulationssystem ferner ein Steuerungsmittel (46) zum derartigen Ausführen einer Steuerung aufweist, dass das durch das Zieleinstellungsmittel (44) eingestellte Ziellenkmoment erreicht ist.

10. Lenkmoment-Anwendungsverfahren mit:

Erfassen eines Lenkwinkels eines Lenkrads (16) und einer Lenkgeschwindigkeit des Lenkrads (16) durch eine Lenkbetätigung eines Fahrers; und

wenn das Lenkrad (16) von einem Neutralzustand des Lenkrads (16) ohne Veränderung einer Lenkrichtung gelenkt ist, Einstellen eines Lenkmoments entsprechend dem erfassten Lenkwinkel und der erfassten Lenkgeschwindigkeit als ein Ziellenkmoment, **dadurch gekennzeichnet, dass**
das Einstellen des Lenkmoments basierend auf einer voreingestellten Korrelation bei jeder Lenkgeschwindigkeit zwischen einer Widerstandshöhe des Fahrers und dem Lenkwinkel oder dem Lenkmoment ausgeführt ist, wobei die Widerstandshöhe basierend auf einer sensorischen Menge einer Lenkmomentveränderungsrate in Bezug auf eine Lenkwinkelveränderung und eine sensorische Menge des Lenkmoments erhalten wird; und
das Lenkmoment-Anwendungsverfahren ferner ein derartiges Ausführen einer Steuerung aufweist, dass das eingestellte Ziellenkmoment erreicht wird.

**11.** Nicht-transitorisches computer-lesbares Speichermedium, das ein Programm speichert, das einen Computer veranlasst, ein Verfahren auszuführen, wobei das Verfahren aufweist:

Erfassen eines Lenkwinkels eines Lenkrads (16) und einer Lenkgeschwindigkeit des Lenkrads (16) durch eine Lenkbetätigung eines Fahrers; und
wenn das Lenkrad (16) von einem Neutralzustand des Lenkrads (16) ohne Veränderung einer Lenkrichtung gelenkt ist, Einstellen eines Lenkmoments entsprechend dem erfassten Lenkwinkel und der erfassten Lenkgeschwindigkeit als ein Ziellenkmoment, **dadurch gekennzeichnet, dass**
das Einstellen des Lenkmoments basierend auf einer voreingestellten Korrelation bei jeder Lenkgeschwindigkeit zwischen einer Widerstandshöhe des Fahrers und dem Lenkwinkel oder dem Lenkmoment ausgeführt ist, wobei die Widerstandshöhe basierend auf einer sensorischen Menge einer Lenkmomentveränderungsrate in Bezug auf eine Lenkwinkelveränderung und einer sensorischen Menge des Lenkmoments erhalten ist, und
das Verfahren ferner ein derartiges Ausführen einer Steuerung aufweist, dass das eingestellte Ziellenkmoment erreicht ist.

**12.** Programm zum Veranlassen eines Computers, ein Verfahren auszuführen, wobei das Verfahren aufweist:

Erfassen eines Lenkwinkels eines Lenkrads (16) und einer Lenkgeschwindigkeit des Lenkrads (16) durch eine Lenkbetätigung eines Fahrers; und
wenn das Lenkrad (16) von einem Neutralzustand des Lenkrads (16) ohne Veränderung einer Lenkrichtung gelenkt ist, Einstellen eines Lenkmoments entsprechend dem erfassten Lenkwinkel und der erfassten Lenkgeschwindigkeit als ein Ziellenkmoment, **dadurch gekennzeichnet, dass**
das Einstellen des Lenkmoments basierend auf einer voreingestellten Korrelation bei jeder Lenkgeschwindigkeit zwischen einer Widerstandshöhe des Fahrers und dem Lenkwinkel oder dem Lenkmoment ausgeführt ist, wobei die Widerstandshöhe basierend auf einer sensorischen Menge einer Lenkmomentveränderungsrate in Bezug auf eine Lenkwinkelveränderung und einer sensorischen Menge des Lenkmoments erhalten ist; und
das Verfahren ferner ein derartiges Ausführen einer Steuerung aufweist, dass das eingestellte Ziellenkmoment erreicht ist.

**Revendications**

**1.** Système de commande de véhicule comprenant :

des moyens de détections (26, 41) pour détecter un angle de braquage d'un volant de direction (16) et une vitesse de braquage du volant de direction (16) lors d'une opération de braquage du conducteur ; et
des moyens de réglage de cible (44) pour, quand le volant de direction (16) est dirigé depuis un état neutre du volant de direction (16) sans changer une direction de braquage, régler un couple de braquage correspondant à l'angle de braquage détecté et à la vitesse de braquage détectée comme un couple de braquage cible, **caractérisé en ce que**
le réglage du couple de braquage est exécuté en fonction d'une corrélation préétablie à chaque vitesse de braquage entre une quantité de résistance du conducteur et l'un de l'angle de braquage et du couple de braquage, la quantité de résistance étant obtenue en fonction d'une quantité sensorielle d'un taux d'une variation du couple de braquage par rapport à une variation de l'angle de braquage et d'une quantité sensorielle du couple de braquage ; et
le système de commande de véhicule comprend en outre des moyens de commande (46) pour exécuter une commande de telle manière que le couple de braquage cible réglé par les moyens de réglage de cible (44) est obtenu.

**2.** Système de commande de véhicule selon la revendication 1, dans lequel
la corrélation préétablie entre la quantité de résistance et le premier de l'angle de braquage et du couple de braquage est réglée de telle manière que la quantité de résistance augmente avec une augmentation de l'un de l'angle de braquage et du couple de braquage.

**3.** Système de commande de véhicule selon la revendication 1 ou 2, dans lequel
les moyens de réglage de cible (44) règlent le couple de braquage correspondant à l'angle de braquage détecté et la vitesse braquage détectée comme un couple de braquage cible en fonction d'une corrélation de correspondance à chaque vitesse de braquage entre l'angle de braquage et le couple de braquage, la corrélation de correspondance étant préétablie en fonction de la corrélation à chaque vitesse de braquage entre la quantité de résistance et l'un de l'angle de braquage et du couple de braquage.

**4.** Système de commande de véhicule selon l'une quelconque des revendications 1 à 3, dans lequel
la quantité de résistance devient constante quand la quantité sensorielle du taux d'une variation du couple de braquage par rapport à une variation de l'angle de braquage se réduit en accélérant avec une augmentation de la quantité sensorielle du couple de braquage.

**5.** Système de commande de véhicule selon l'une quelconque des revendications 1 à 4, dans lequel
la quantité sensorielle du couple de braquage augmente conjointement avec le couple de braquage, et une quantité d'augmentation de la quantité sensorielle du couple de braquage avec une augmentation du couple de braquage change d'une tendance de réduction progressive à une tendance d'augmentation progressive.

**6.** Système de commande de véhicule selon la revendication 5, dans lequel
le couple de braquage au moment où la quantité d'augmentation avec une augmentation du couple de braquage change de la tendance de réduction progressive à la tendance d'augmentation progressive est dans une plage de 2 à 3 Nm.

**7.** Système de commande de véhicule selon l'une quelconque des revendications 1 à 6, dans lequel
la quantité sensorielle du taux d'une variation du couple de braquage par rapport à une variation de l'angle de braquage est directement proportionnelle au logarithme du taux d'une variation du couple de direction par rapport à une variation de l'angle de braquage.

**8.** Système de commande de véhicule selon l'une quelconque des revendications 1 à 7, dans lequel
les moyens de commande (46) exécutent une commande de telle manière qu'une quantité d'assistance de couple, qui correspond au couple de braquage cible réglé par les moyens de réglage de cible (44), ou au couple de braquage cible réglé est générée.

**9.** Système de simulation de direction comprenant :

des moyens de détection (26, 41) pour détecter un angle de braquage d'un volant de direction (16) et une vitesse de braquage du volant de direction (16) lors de l'opération de braquage d'un conducteur ; et
des moyens de réglage de cible (44) pour, quand le volant de direction (16) est braqué depuis un état neutre du volant de direction (16) sans changer une direction de braquage, régler un couple de braquage correspondant à l'angle de braquage détecté et à la vitesse de braquage détectée comme un couple de braquage cible, **caractérisé en ce que**
le réglage du couple de braquage est exécuté en fonction d'une corrélation préétablie à chaque vitesse de braquage entre une quantité de résistance du conducteur et l'un de l'angle de braquage et du couple de braquage, la quantité de résistance étant obtenue en fonction d'une quantité sensorielle d'un taux de variation du couple de braquage par rapport à une variation de l'angle de braquage et d'une quantité sensorielle du couple de braquage ; et
le système de commande de véhicule comprend en outre des moyens de commande (46) pour exécuter une commande de telle manière que le couple de braquage cible réglé par les moyens de réglage de cible (44) est obtenu.

**10.** Procédé d'application de couple de braquage comprenant :

de détecter un angle de braquage d'un volant de direction (16) et une vitesse de braquage du volant de direction (16) lors de l'opération de braquage du conducteur ; et

quand le volant de direction (16) est braqué depuis un état neutre du volant de direction (16) sans changer une direction de braquage, régler un couple de braquage correspondant à l'angle de braquage détecté et à la vitesse de braquage détectée comme un couple de braquage cible, **caractérisé en ce que**

le réglage du couple de braquage est exécuté en fonction d'une corrélation préétablie à chaque vitesse de braquage entre une quantité de résistance du conducteur et l'un de l'angle de braquage et du couple de braquage, la quantité de résistance étant obtenue en fonction d'une quantité sensorielle d'un taux de variation du couple de braquage par rapport à une variation de l'angle de braquage et d'une quantité sensorielle du couple de braquage ; et

le procédé d'application de couple de braquage comprend en outre d'exécuter une commande de telle manière que le couple de braquage cible réglé est obtenu.

11. Support de stockage lisible informatiquement non transitoire stockant un programme pour faire exécuter par un ordinateur un procédé dans lequel le procédé comprend :

de détecter un angle de braquage d'un volant de direction (16) et une vitesse de braquage du volant de direction (16) lors de l'opération de braquage du conducteur ; et

quand le volant de direction (16) est braqué depuis un état neutre du volant de direction (16) sans changer une direction de braquage, de régler un couple de braquage correspondant à l'angle de braquage détecté et à la vitesse de braquage détectée comme un couple de braquage cible, **caractérisé en ce que**

le réglage du couple de braquage est exécuté en fonction d'une corrélation préétablie à chaque vitesse de braquage entre une quantité de résistance du conducteur et l'un de l'angle de braquage et du couple de braquage, la quantité de résistance étant obtenue en fonction d'une quantité sensorielle d'un taux de variation du couple de braquage par rapport à une variation de l'angle de braquage et d'une quantité sensorielle du couple de braquage ; et

le procédé comprend en outre d'exécuter une commande de telle manière que le couple de braquage cible réglé est obtenu.

12. Programme pour faire exécuter par un ordinateur un procédé, dans lequel le procédé comprend :

de détecter un angle de braquage d'un volant de direction (16) et une vitesse de braquage du volant de direction (16) lors de l'opération de braquage du conducteur ; et

quand le volant de direction (16) est braqué depuis un état neutre du volant de direction (16) sans changer une direction de braquage, de régler un couple de braquage correspondant à l'angle de braquage détecté et à la vitesse de braquage détectée comme un couple de braquage cible, **caractérisé en ce que**

le réglage du couple de braquage est exécuté en fonction d'une corrélation préétablie à chaque vitesse de braquage entre une quantité de résistance du conducteur et l'un de l'angle de braquage et du couple de braquage, la quantité de résistance étant obtenue en fonction d'une quantité sensorielle d'un taux de variation du couple de braquage par rapport à une variation de l'angle de braquage et d'une quantité sensorielle du couple de braquage ; et

le procédé comprend en outre d'exécuter une commande de telle manière que le couple de braquage cible réglé est obtenu.

# FIG.1

EP 2 634 067 B1

# FIG.2

EP 2 634 067 B1

# FIG.3A

STEERING ANGLE

STEERING TORQUE

# FIG.3B

STIFFNESS

STEERING TORQUE

# FIG.4

```
CONVEX
DOWNWARD

INFLECTION
POINT

CONVEX
UPWARD
```

SENSORY QUANTITY OF STEERING TORQUE

2 TO 3 Nm
PHYSICAL QUANTITY
OF STEERING TORQUE

# FIG.5

CONTROLLER

STEERING SIMULATOR

# FIG.6A

THRESHOLD

REFERENCE QUANTITY
OF STIFFNESS

# FIG.6B

SENSORY QUANTITY
OF STIFFNESS

PHYSICAL QUANTITY
OF STIFFNESS

# FIG.7

RESISTANCE
QUANTITY INCREASES

SENSORY QUANTITY
OF STIFFNESS

SENSORY QUANTITY
OF STEERING TORQUE

# FIG.8

RESISTANCE
CONTOUR LINE

SENSORY QUANTITY
OF STIFFNESS

A

RESISTANCE
EXPERIENCED
AT HIGH STEERING
VELOCITY IN STEERING
REACTION FORCE
CHARACTERISTIC A

SENSORY QUANTITY
OF STEERING TORQUE

# FIG.9A

STEERING VELOCITY x

RESISTANCE INCREASES

SENSORY QUANTITY OF STIFFNESS

① ② ③ ④ ⑤

SENSORY QUANTITY OF STEERING TORQUE

# FIG.9B

STEERING VELOCITY y

SENSORY QUANTITY OF STIFFNESS

⑤
④
③
②
①

SENSORY QUANTITY OF STEERING TORQUE

# FIG.9C

STEERING VELOCITY z

⑤
④
③
②
①

SENSORY QUANTITY OF STIFFNESS

SENSORY QUANTITY OF STEERING TORQUE

24

# F I G . 10

RESISTANCE QUANTITY

MONOTONOUSLY INCREASES

CONSTANT

$E_0$

STEERING TORQUE

# F I G . 11

RESISTANCE QUANTITY INCREASES

SENSORY QUANTITY OF STIFFNESS

ALONG CONTOUR LINE

GRADUALLY SHIFTS TO LARGER RANGE

SENSORY QUANTITY OF STEERING TORQUE

# FIG.12

CHARACTERISTIC CALCULATION
PROCESS ROUTINE

SET STEERING VELOCITY vs TO ZERO — 100

SET STEP SIZE $d_{vs}$ OF STEERING VELOCITY vs — 101

LOAD CORRELATION BETWEEN STEERING
TORQUE AND RESISTANCE QUANTITY — 102

SET STEERING ANGLE q AND STEERING
TORQUE T TO ZERO — 103

SET STEP SIZE dT OF STEERING TORQUE T — 104

CALCULATE TARGET RESISTANCE QUANTITY
$E_T$ FROM STEERING TORQUE T — 106

CONVERT PHYSICAL QUANTITY OF STEERING TORQUE
TO SENSORY QUANTITY OF STEERING TORQUE — 108

CALCULATE CORRESPONDING SENSORY QUANTITY OF
STIFFNESS FROM RESISTANCE CONTOUR LINES — 110

CONVERT SENSORY QUANTITY OF STIFFNESS
TO PHYSICAL QUANTITY $k_T$ OF STIFFNESS — 112

CALCULATE COMBINATION OF STEERING ANGLE $q_{T+dT}$ AND
STEERING TORQUE T+dT FROM $k_T$, AND STORE COMBINATION — 114

ARE STEERING
ANGLE AND STEERING TORQUE
SUFFICIENTLY
LARGE ? — 116

NO — 118

$T = T + dT$

YES

IS
STEERING VELOCITY SUFFICIENTLY
HIGH ? — 120

NO — 122

$Vs = Vs + d_{vs}$

YES

END

# FIG.13

SENSORY QUANTITY OF STIFFNESS

SENSORY QUANTITY
OF STEERING TORQUE

# FIG.14

dT

STEERING ANGLE

STEERING TORQUE

# FIG.15

**EP 2 634 067 B1**

```
        ( TORQUE CONTROL    )
        ( PROCESS ROUTINE   )
                 │
                 │                        130
        ┌──────────────────────┐
        │  ACQUIRE OUTPUTS     │
        │    OF SENSORS        │
        └──────────────────────┘
                 │                        131
        ┌──────────────────────┐
        │  CALCULATE STEERING  │
        │     VELOCITY         │
        └──────────────────────┘
                 │                        132
        ┌──────────────────────┐
        │  DETERMINE AND STORE │
        │  STEERING STATE OF   │
        │  STEERING WHEEL      │
        └──────────────────────┘
                 │                        134
                ╱ ╲
      NO      ╱ IS STEERING ╲
    ┌────────╱ WHEEL IN ONE-WAY STEERED ╲
    │        ╲ STATE FROM NEUTRAL ╱
    │          ╲  STATE ? ╱
    │            ╲  ╱
    │             │ YES
    │   138       │           136
┌──────────────────┐   ┌──────────────────┐
│ SET TARGET STEERING│  │ SET TARGET STEERING│
│ TORQUE FROM STEERING│ │ TORQUE FROM STEERING│
│ ANGLE AND STEERING │  │ ANGLE USING FIRST MAP│
│ VELOCITY USING     │  └──────────────────┘
│ SECOND MAP         │           │
└──────────────────┘            │        140
    │                  ┌──────────────────┐
    └─────────────────▶│  CALCULATE ASSIST │
                       │     AMOUNT        │
                       └──────────────────┘
                                │          142
                       ┌──────────────────┐
                       │ EXECUTE ASSIST CONTROL│
                       └──────────────────┘
```

28

# F I G . 16

RESISTANCE QUANTITY

MONOTONOUSLY
INCREASES

CONSTANT

STEERING ANGLE

# FIG. 17

CHARACTERISTIC CALCULATION
PROCESS ROUTINE

SET STEERING VELOCITY vs TO ZERO —100

SET STEP SIZE $d_{vs}$ OF STEERING VELOCITY vs —101

LOAD CORRELATION BETWEEN STEERING
ANGLE AND RESISTANCE QUANTITY —200

SET STEERING ANGLE q AND STEERING
TORQUE T TO ZERO —103

SET STEP SIZE dq OF STEERING ANGLE —202

CALCULATE RESISTANCE QUANTITY $E_q$ FROM
STEERING ANGLE q —204

CALCULATE TARGET RESISTANCE QUANTITY
$E_{q+dq}$ AT STEERING ANGLE q+dq —206

MAKE SEARCH FOR COMBINATION OF STEERING TORQUE
$T_{q+dq}$ AND STIFFNESS $k_q$, WHICH IS ABLE TO ACHIEVE
RESISTANCE QUANTITY $E_{q+dq}$ AT STEERING ANGLE q+dq,
BY LOOKUP OF RESISTANCE CONTOUR LINES —208

CALCULATE STEERING TORQUE $T_{q+dq}$ AT STEERING
ANGLE q+dq ON THE BASIS OF FOUND RESULT,
AND STORE STEERING TORQUE $T_{q+dq}$ —212

ARE STEERING
ANGLE AND STEERING TORQUE
SUFFICIENTLY
LARGE ? 116 NO 214

q = q + dq

YES

IS
STEERING VELOCITY SUFFICIENTLY
HIGH ? 120 NO 122

Vs = Vs + $d_{vs}$

YES

END

# FIG.18

SENSORY QUANTITY OF STIFFNESS

SENSORY QUANTITY OF STEERING TORQUE

EP 2 634 067 B1

# FIG.19

# FIG.20

STEERING ANGLE SIGNAL,
STEERING VELOCITY SIGNAL

STEERING ANGLE SIGNAL,
STEERING TORQUE SIGNAL

STEERING VELOCITY x

RESISTANCE

STEERING ANGLE

STEERING ANGLE

PRESENT
VALUE

PREVIOUS
VALUE

STEERING TORQUE

TARGET
RESISTANCE
QUANTITY

STIFFNESS

SENSORY QUANTITY
OF STIFFNESS

RESISTANCE
CONTOUR
LINE MAP

SENSORY QUANTITY
OF STEERING TORQUE

TARGET
STEERING
TORQUE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004175163 A
- JP 2003285753 A
- JP 2011057173 A
- EP 1243496 A2